# EUROPEAN PATENT APPLICATION

(11) **EP 1 770 964 A2**
(43) Date of publication of application: **04.04.2007**
(21) Application number: 06014909.3
(22) Date of filing: 18.07.2006
(51) Int. Cl.: H04M 1/02, H04M 1/03, H04R 5/02, H04M 1/725

(54) **Speaker device for portable terminal and portable terminal comprising the same**

(30) Priority: 29.09.2005 KR 20050091348
(71) Applicant: Samsung Electronics Co., Ltd., Suwon-si, Gyeonggi-Do (KR)
(72) Inventor: Kim, Jung-Han, c/o Samsung Electronics Co., Ltd., Suwon-si, Gyeonggi-do (KR)
(74) Representative: Lang, Johannes

(57) **Abstract**

A speaker device and a portable terminal are provided. The speaker device includes a first sub-housing for receiving a speaker unit, and a second sub-housing assembled with the first sub-housing for fixing the speaker unit, in which the second sub-housing includes at least a pair of openings for outputting sound from the speaker unit, and the first sub-housing and the second sub-housing constitute a speaker housing. Since the speaker device for the portable terminal uses the speaker housing having a resonance structure, it is used as a woofer to reinforce bass sound. Furthermore, the speaker device constructs a 2.1 channel audio system along with other speaker devices installed in the portable terminal, thereby providing sound similar to the original sound when a user listens to music files or watches moving picture files or broadcasting programs such as DMB and TV.

## Description

### BACKGROUND OF THE INVENTION

### Field of the Invention

The present invention relates to a speaker device and a portable terminal. More particularly, the present invention relates to a speaker device for a portable terminal which has stereo and reinforced bass sound, thereby providing a 2.1 channel-audio system for the portable terminal.

### Description of the Related Art

Generally, a "portable terminal" refers to an electronic device which can provide a wireless communication function through a mobile communication station between users or between a user and a service provider. A voice communication service, a short message sending service, mobile banking, and various kinds of service content, such as TV programs, on-line games, video on demand, and the like, are provided to users through such portable terminals.

Conventional portable terminals may be classified into various types, according to their appearance, such as a bar-type portable terminal, a flip-type portable terminal, and a folder-type portable terminal. The bar-type portable terminal has single bar-type housing, and a communication circuit, a transmitter, a receiver and an input/output device which are installed in the housing. The flip-type portable terminal has a bar-type housing with a lid that flips installed on the bar-type housing. The folder-type portable terminal has a pair of housings which rotate so as to be opened and closed and which have input and output devices dispersedly disposed therein respectively. Recently, together with the folder type-portable terminal, sliding type portable terminals have appeared to satisfy users' various requirements while increasing portability and convenience of the portable terminals.

The mobile communication services using such a portable terminal have been initially limited to voice communication service, short message sending service, and the like. Now, the mobile communication services have been expanded to include multimedia services such as a service for transmitting game files, music files and moving picture files, an on-line game service, and Digital Multimedia Broadcasting (hereinafter, referred to as DMB).

Display units for a portable terminal have already been manufactured from a thin film transistor device instead of a liquid crystal display of a single color so as to realize high-quality and colorful images before the multimedia service and the DMB service have become commercially available. Such a display unit can provide sufficient performance required to use a multimedia service or to watch DMB.

On the other hand, in order to provide a speaker device suitable for the multimedia service and the DMB service, separate speaker units are additionally installed in a portable terminal along with a speaker unit for outputting bell and speaking sounds. The portable terminal realizes stereo sound through the additional speaker units.

However, the additional speaker units cannot sufficiently exhibit lifelike performance because of the limited space in the portable terminal. Specifically, the limited space in the portable terminal disturbs realization of bass sound by the speaker units installed in the portable terminal. As a result, there is a limitation in the ability to listen to sound similar to the original sound while a user uses multimedia services and watches DMB, and the like.

Accordingly, there is a need for an improved speaker device to be used in a mobile communication device.

### SUMMARY OF THE INVENTION

The present invention has been made to address the above-mentioned problems occurring in the prior art, and an exemplary object of the present invention is to provide a speaker device and a portable terminal which realize bass sound.

Another exemplary object of the present invention is to provide a speaker device for a portable terminal, which has a separate speaker device capable of realizing bass sound so as to construct a 2.1 channel-audio system.

Still another exemplary object of the present invention is to provide a speaker device for a portable terminal, which provides sound similar to the original sound during the use of multimedia service or watching Digital Multimedia Broadcasting (DMB).

In order to achieve the exemplary object of the present invention, according to exemplary embodiments of the present invention there are provided a portable terminal and a speaker device comprising a first sub-housing for receiving a speaker unit and a second sub-housing assembled with the first sub-housing to fix the speaker unit, in which the second sub-housing includes at least a pair of openings for outputting sound from the speaker unit, and the first sub-housing and the second sub-housing constitute a speaker housing.

### BRIEF DESCRIPTION OF THE DRAWINGS

The above and other objects, features, and advantages of the present invention will be more apparent from the following detailed description taken in conjunction with the accompanying drawings, in which:
FIG. 1 is an exploded perspective view showing a speaker device for a portable terminal according to an exemplary embodiment of the present invention;
FIG. 2 is an exploded perspective view showing the speaker device shown in FIG. 1 viewed from another angle;
FIG. 3 is a perspective view showing a portable terminal having the speaker device shown in FIG. 1; and
FIG. 4 is a view showing the speaker device in FIG. 1 with a housing of the portable terminal.

Throughout the drawings, the same drawing reference numerals will be understood to refer to the same elements, features, and structures.

### DETAILED DESCRIPTION OF THE EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Hereinafter, the exemplary embodiment of the present invention will be described with reference to the accompanying drawings. In the following description, a detailed description of known functions and configurations incorporated herein is omitted to avoid making the subject matter of the present invention unclear.

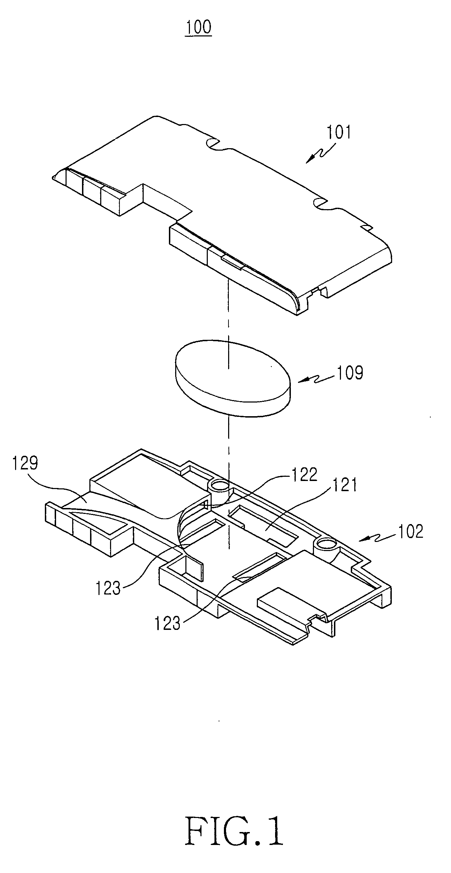

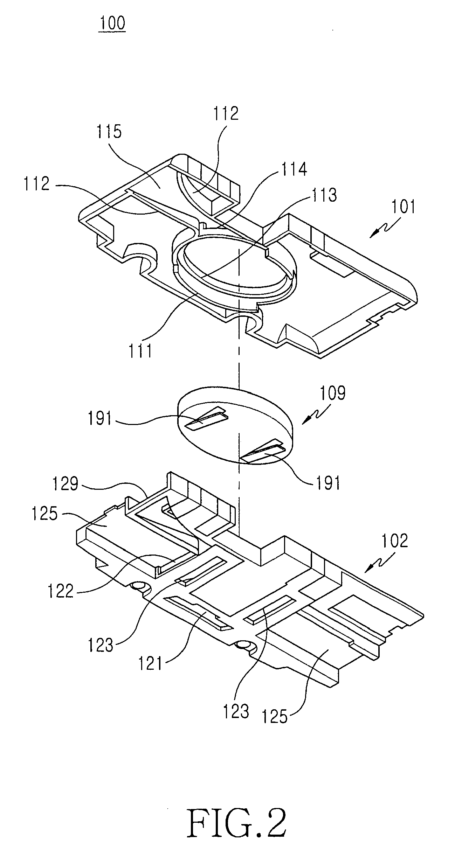

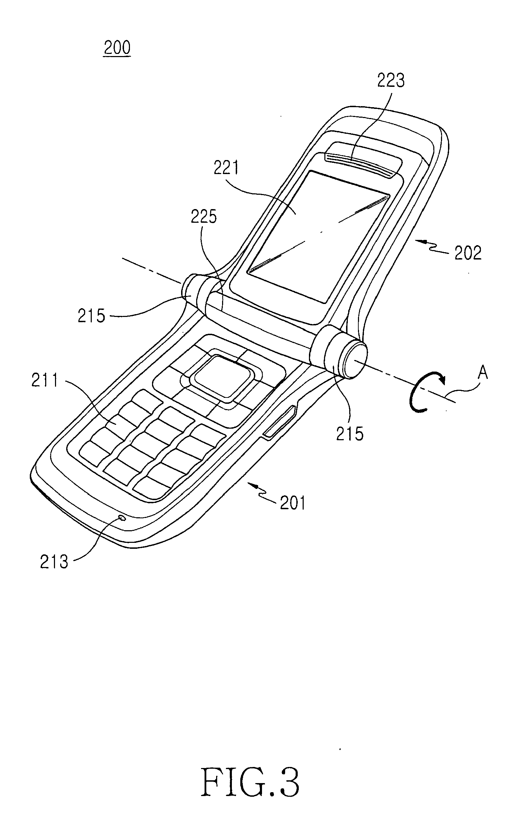

As shown in FIGS. 1 and 2, a speaker device 100 for a portable terminal 200 (see FIG. 3) according to an exemplary embodiment of the present invention includes a speaker housing constructed by assembling a combination of a first sub-housing 101 with a second sub-housing 102.

The first sub-housing 101 is provided with a coupling rib 111 which is formed on an inner surface of the first sub-housing 101 to receive the speaker unit 109 in a space defined by the coupling rib 111. The coupling rib 111 is formed to surround a peripheral surface of the speaker unit 109 and has a step portion 113 on an inner peripheral surface thereof. The step portion 113 supports an edge of the speaker unit 109, so as to allow the speaker unit 109 to be spaced from the speaker housing, particularly the inner peripheral surface of the first sub-housing 101.

The second sub-housing 102 is associated with the first sub-housing 101 while facing the first sub-housing 101, so as to close the first sub-housing 101, and thereby protect the speaker unit 109. In order to contact the speaker unit 109 to circuit units of the portable terminal, a pair of contact terminals 191 is mounted on the speaker unit 109. The contact terminals 191 are mounted on a surface of the speaker unit 109, of which the end portion accumulates elastic force operating in a direction away from the speaker unit 109.

The second sub-housing 102 has openings 121 and 122 to output sound generated from the speaker unit 109. In addition, the second sub-housing 102 includes other openings 123 which are formed in the second sub-housing 102 so as to expose the contact terminal 191 of the speaker unit 109.

The openings 121 and 122 formed in the second sub-housing 102 to output sound include a first opening 121 formed toward the front surface of the second sub-housing 102 and second openings 122 respectively formed toward both sides of the second sub-housing 102. A part of the speaker unit 109 is exposed through the first opening 121.

The second sub-housing 102 has a pair of guide grooves 125 formed on an outer surface thereof. The guide grooves 125 respectively extend from the second openings 122 toward both sides of the second sub-housing 102.

When the speaker housing is fixed to the portable terminal and a circuit board (not shown) for the portable terminal is assembled with the portable terminal, the guide grooves 125 face the circuit board so as to form a resonance structure. The resonance structure achieved by the circuit board of the portable terminal and the guide grooves 125 plays the role of reinforcing bass sound outputted from the speaker unit 109. In addition, the contact terminals 191 of the speaker unit 109 are respectively exposed through third openings 123 so as to contact the circuit board of the portable terminal.

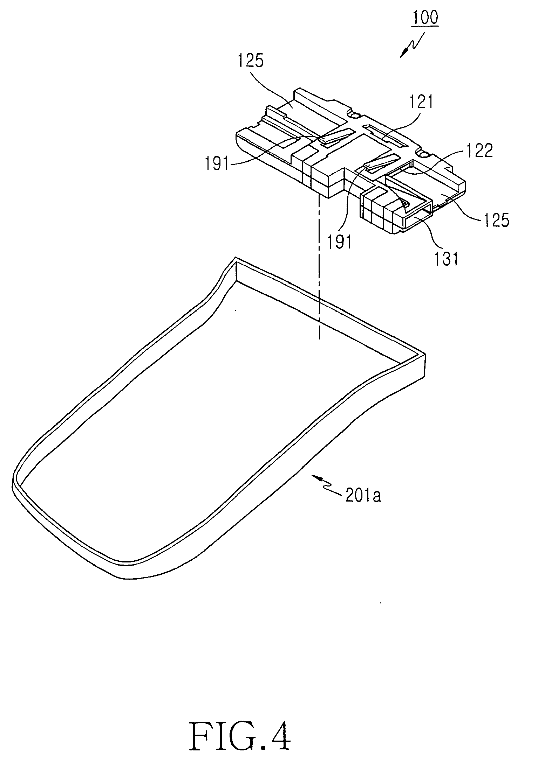

On the other hand, the speaker device 100 includes a sound waveguide 131 (see FIG. 4) defined by coupling the first and second sub-housings 101 and 102. The sound guide 131 is defined by the combination of a first waveguide groove 115 formed in the first sub-housing 101 and a second waveguide groove 129 formed in the second sub-housing 102. The first waveguide groove 115 is surrounded by a pair of ribs 112 formed to face each other on an inner surface of the first sub-housing 101 and the inner surface of the first sub-housing 101. When the first sub-housing 101 is combined with the second sub-housing 102, the first and second waveguide grooves 115 and 129 face each other so as to define the sound waveguide 131.

The ribs 112 respectively extend from an outer peripheral surface of the coupling rib 111 to a side of the first sub-housing 101. Specifically, the first waveguide 115 extends from an outer peripheral surface of the coupling rib 111 toward a side of the first sub-housing 101. After all, the sound waveguide 131 extends from the outer peripheral surface of the coupling rib 111 toward a side of the speaker housing and is exposed at a side of the speaker housing to the outside. As the sound waveguide 131 extends from the coupling rib 111 to a side of the speaker housing, the sound waveguide 131 extends side by side one of the guide grooves 125.

The sound waveguide 131 is communicated through a fourth opening 114 with a space defined by the coupling rib 111. The fourth opening 114 is formed at a proximal end of the coupling rib 111 and located adjacent to an inner surface of the first sub-housing 101. Therefore, the fourth opening 114 is communicated with a space between the speaker unit 109 and the inner surface of the first sub-housing 101 in the coupling rib 111. The sum of sound output from the speaker unit 109 propagates through the fourth opening 114 and the sound waveguide 131 and is output to the outside. The sound waveguide 131 also forms a resonance structure so as to play the role of reinforcing bass sound generated from the speaker unit 109.

In order to improve a resonance characteristic of the sound waveguide 131 and particularly to reinforce the bass sound of the speaker unit 109, the sound waveguide 131 has a cross sectional area which gradually increases from the outer peripheral surface of the coupling rib 111 toward the side of the speaker housing. As the cross sectional area of the sound waveguide 131 gradually increases from the outer peripheral surface of the coupling rib 111 toward the side of the speaker housing, air pressure in the sound waveguide 131 gradually decreases until it becomes equal to the atmospheric pressure at one side of the speaker housing. At the side of the speaker housing, the air pressure experiences impedance-matching with the outside air having a lower impedance, so that it is possible to reinforce the bass sound.

Referring to FIG. 3, the portable terminal 200 including the speaker device 100 is a folder type portable terminal of which a first housing 201 rotates about a second housing 202 and is folded and unfolded with respect to the second housing 202. The first housing 201 has a keypad 211 and a transmitter 213 disposed on the front surface of the first housing 201, so that the keypad 211 and the transmitter 213 are opened and closed as the second housing 202 rotates. The second housing 202 has a display unit 221 and a receiver 223 disposed on the front surface of the second housing 202, so that the display unit 221 and the receiver 223 are opened and closed like the keypad 211 and the transmitter 213 as the second housing 202 rotates.

In order to couple the first housing 201 to the second housing 202 so that the first housing 201 rotates with respect to the second housing 202, a pair of side hinge arms 215 is provided at an upper end of the first housing 201 so as to face each other, while a center hinge arm 225 is provided at a lower end of the second housing 202. As the center hinge arm 225 is rotatably disposed between the side hinge arms 215, the second housing 202 is rotatably coupled to the first housing 201. The structure for coupling the pair of housings constructing such a folder type portable terminal can be understood by a person skilled in the art.

Although not shown, the speaker units are installed in the side hinge arms 215. The portable terminal 200 can realize stereo sound using the speaker units. As described above, however, it is noted that the bass sound cannot be realized by means of only the speaker units installed in the side hinge arms 215 when multimedia files including music file are played.

In this exemplary embodiment of the present invention, it is described that the speaker units realizing the stereo sound are disposed between the side hinge arms. However, the installation location of the speaker units can be changed variously. For example, the second housing has a pair of speaker units installed therein and can output sound through its sides, thereby outputting stereo sound regardless of opening and closing of the portable terminal 200.

The speaker device 100 reinforces the bass sound output from the speaker unit installed in the first housing of the portable terminal, thereby realizing the sound similar to the original sound along with other speaker units.

Referring to FIG. 4, the speaker device 100 is mounted on the rear case 201 a of the first housing 201. The rear case 201 a has variously shaped structures formed on the inner surface thereof in order to mount a circuit board, a battery pack, and the speaker device 100. However, structure of the inner surface of the rear case 20 1 a is not shown to briefly describe the rear case 201 a.

The speaker device 100 is mounted so that the first sub-housing 101 faces the inner surface of the rear case 201a. The circuit board (not shown) is mounted on the rear case 201a in the state that the speaker device 100 is mounted. When the circuit board is mounted, the contact terminals 191 exposed through the outer peripheral surface of the second sub-housing 102 are connected to the circuit board.

On the other hand, the larger the diameter of the speaker unit is, the easer the bass sound can be realized. However, in the case of the portable terminal, it is difficult to obtain a mounting space. A speaker unit having a relatively large diameter and mounted in the portable terminal includes an elliptical speaker unit having a short diameter 13mm and a long diameter of 18mm. When such an elliptical speaker unit and speaker housing are used together, the speaker device 100 has a resonance frequency of 425Hz, so as to reinforce the bass sound in comparison with the conventional speaker devices having a resonance frequency of 750~850 Hz. Such frequency can be achieved by adjusting the numbers and the size of openings, which output the sound generated from the speaker unit 109, such as first and second openings 121 and 122. For example, the resonance frequency can be controlled by the numbers and the size of the openings formed in the speaker housing based on a sound condition required to produce.

Accordingly, the speaker device 100 can be installed in the housing of the portable terminal to perform a woofer function, thereby constructing a 2.1 channel audio system along with a pair of speakers which are mounted in the portable terminal so as to realize stereo sound.

As described above, since the speaker device for the portable terminal according to the exemplary invention uses the speaker housing having the resonance structure, it is possible to use the speaker device as a woofer capable of reinforcing the bass sound. Thus, the speaker device constructs the 2.1 channel audio system along with other speaker units installed in the portable terminal, thereby providing sound similar to the original sound while a user listens to music files or watches broadcasting programs including moving picture files and DMB.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A speaker device for a portable terminal, comprising:
a first sub-housing for receiving a speaker unit; and
a second sub-housing assembled with the first sub-housing to fix the speaker unit, wherein the second sub-housing comprising at least a pair of openings for outputting sound from the speaker unit, and a speaker housing comprises the first sub-housing and the second sub-housing.

2. The speaker device for a portable terminal as claimed in claim 1, wherein the openings comprise a first opening formed in the second sub-housing and extending toward a front surface of the speaker housing, and second openings formed in the second sub-housing and extending toward both sides of the speaker housing.

3. The speaker device for a portable terminal as claimed in claim 2, wherein the second sub-housing further comprises a pair of guide grooves formed on an outer surface of the second sub-housing, in which the guide grooves extend from the second openings toward both sides of the second sub-housing, respectively.

4. The speaker device for a portable terminal as claimed in claim 1, wherein the second sub-housing further comprises at least one third opening formed in the second sub-housing and opened toward a front surface of the second sub-housing, in which at least one contact terminal of the speaker unit is exposed through the third opening.

5. The speaker device for a portable terminal as claimed in claim 1, further comprising a coupling rib extending from an inner surface of the first sub-housing and surrounding the speaker unit.

6. The speaker device for a portable terminal as claimed in claim 5, further comprising a step portion formed on an inner surface of the coupling rib, wherein the speaker unit is spaced from the inner surface of the first sub-housing as the step portion supports an edge of a surface of the speaker unit surrounded by the coupling rib.

7. The speaker device for a portable terminal as claimed in claim 5, wherein the first sub-housing further comprises a fourth opening formed at a proximal end of the coupling rib and located near an inner surface of the first sub-housing.

8. The speaker device for a portable terminal as claimed in claim 7, wherein the first sub-housing further comprises a first waveguide groove surrounded by an inner surface of the first sub-housing and a pair of ribs extending from an outer peripheral surface of the coupling rib toward a side of the first sub-housing, and the second sub-housing further comprises a second waveguide groove depressed in an inner surface of the second sub-housing..

9. The speaker device for a portable terminal as claimed in claim 8, wherein the sound waveguide comprises one end connected to the fourth opening and the other end connected to a side of the speaker housing and exposed out of the side of the speaker housing.

10. The speaker device for a portable terminal as claimed in claim 9, wherein the sound waveguide comprises a cross sectional area which gradually increases from the fourth opening to the side of the speaker housing.

11. The speaker device for a portable terminal as claimed in claim 1, wherein the speaker housing comprises second openings formed to face both sides of the speaker housing, guide grooves formed on an outer surface of the second sub-housing extending from the second openings to the side of the speaker housing, and a sound waveguide extending side by side one of the guide grooves from a portion adjacent to the speaker unit in the speaker housing.

12. The speaker device for a portable terminal as claimed in claim 11, wherein the sound waveguide extends toward the side of the speaker housing and comprises a cross sectional area which gradually increases from the speaker unit to the side of the speaker housing.

13. The speaker device for a portable terminal as claimed in claim 8, wherein the first and second waveguide grooves form a sound waveguide when the first sub-housing is assembled with the second sub-housing.

14. A speaker device for a portable terminal, comprising:
a first sub-housing receiving a speaker unit; and
a second sub-housing assembled with the first sub-housing and fixing the speaker unit, the second sub-housing comprising at least a pair of openings for outputting sound from the speaker unit,
wherein a speaker unit comprises the first sub-housing and the second sub-housing, and a resonance frequency is controlled depending on the number and the size of the openings.

15. A portable terminal comprising the speaker device as claimed in claim 1.

16. A portable terminal comprising the speaker device as claimed in claim 14.
